# EUROPEAN PATENT APPLICATION

(11) **EP 3 517 415 A1**
(43) Date of publication of application: **31.07.2019**
(21) Application number: 19153232.4
(22) Date of filing: 23.01.2019
(51) Int. Cl.: B62D 35/02

(54) **AN AIR GUIDE FOR A MOTOR VEHICLE**

(30) Priority: 24.01.2018 GB 201801156
(71) Applicant: Nissan Motor Manufacturing (UK) Ltd, Bedford Bedfordshire MK43 0DB (GB)
(72) Inventor: NUTI, Nazario, Bedford, Bedfordshire MK430DB (GB)

(57) **Abstract**

The present invention relates to an air guide (4) for directing airflow round a wheel (2) of a vehicle when the vehicle is moving relative to the air. The air guide comprises a vortex generator (18) positionable in a region in front of the wheel (2) and configured to generate a first tip vortex (25) propagating downstream of the air guide (4) substantially along an outboard side (14) of the wheel.

## Description

This invention relates to an air guide for directing airflow round a wheel of a motor vehicle. In particular, it relates to an air guide for establishing a flow structure in the vicinity of the wheel.

### BACKGROUND

The wake produced by the rotation of the wheels of a motor vehicle is a very important flow structure that, if left unchecked, can significantly increase the drag coefficient of the vehicle.

Various structures have been used to manage this wake. These structures range from flat plates, extending generally perpendicularly with respect to the oncoming airflow, through to structures that are more complex. For the most part, these structures function simply to deflect the oncoming airflow round the wheel in order to prevent it from reaching the wheel. However, this means that the structures themselves create their own wake and, in some instances, also create undesirable lift forces and other aerodynamic instabilities that act on the motor vehicle.

An object of this invention is to mitigate or substantially reduce the undesirable effects produced by these known structures.

### STATEMENTS OF INVENTION

According to a first aspect of the invention, there is provided an air guide for directing airflow round a wheel of a vehicle when the vehicle is moving relative to the air, the air guide comprising: a first vortex generator positionable in a region in front of the wheel with respect to the longitudinal axis of the vehicle and projecting downwards from an underbody of the vehicle, the first vortex generator being configured to generate a first tip vortex propagating downstream of the air guide substantially along an outboard side of the wheel. The tip vortex entrains the wake produced by the rotation of the wheel to lower the drag coefficient of the vehicle.

Preferably, the first vortex generator is positioned to traverse a proportion of the width of the wheel. This redirects airflow, which would otherwise impinge the wheel, to the outboard side of the wheel when the vehicle is moving relative to the air. More preferably, the first vortex generator is positioned to traverse the entire width of the wheel.

Preferably, the air guide further comprises a second vortex generator positionable adjacent the first vortex generator in the region in front of the wheel and projecting downwards from the underbody of the vehicle, the second vortex generator being configured to generate a second tip vortex propagating downstream of the air guide substantially along an inboard side of the wheel. This tip vortex entrains the wake produced on the inboard side of the wheel, further lowering the drag coefficient of the vehicle.

Preferably, the first vortex generator and the second vortex generator are positioned to traverse substantially equal proportions of the width of the wheel. Alternatively, the first vortex generator is positioned to traverse a larger proportion of the width of the wheel when compared to the proportion of the width of the wheel traversed by the second vortex generator.

Preferably, the cross-sectional shape of the first vortex generator is an aerofoil. More preferably, the cross-sectional shape of the second vortex generator is also an aerofoil.

Preferably, the first vortex generator comprises a plurality of plates arranged in series, wherein the cross-sectional shape of at least one plate of the plurality of plates is an aerofoil.

Preferably, the second vortex generator comprises a plurality of plates arranged in series, wherein the cross-sectional shape of at least one plate of the plurality of plates is an aerofoil.

Preferably, the consecutive plates of the plurality of plates of the first vortex generator and / or the second vortex generator are arranged to overlay.

Preferably, the plurality of plates arranged in series comprises a blowing slot located between consecutive plates of the plurality of plates. The blowing slot enables the transfer of high-energy, turbulent air from the pressure side of the vortex generator to the suction side, to re-energise the airflow along the suction side.

Preferably, the convex side of the first vortex generator substantially faces a region on the inboard side of the wheel such that, when in use, the resultant lift force generated by the first vortex generator points towards the inboard side of the wheel. Alternatively, the convex side of the first vortex generator substantially faces a region on the outboard side of the wheel such that, when in use, the resultant lift force generated by the first vortex generator points towards the outboard side of the wheel.

Preferably, the convex side of the second vortex generator substantially faces a region on the inboard side of the wheel such that, when in use, the resultant lift force generated by the second vortex generator points towards the inboard side of the wheel. Alternatively, the convex side of the second vortex generator substantially faces a region on the outboard side of the wheel such that, when in use, the resultant lift force generated by the second vortex generator points towards the outboard side of the wheel.

Preferably, the cross-sectional shape of the first vortex generator and / or the second vortex generator is a cambered aerofoil.

Preferably, the first vortex generator and / or the second vortex generator are arranged to redirect the airflow from the longitudinal axis of the vehicle by an angle of up to 90°. It is particularly preferable if the first vortex generator and / or the second vortex generator are arranged to redirect the airflow from the longitudinal axis of the vehicle by an angle within a range of 10° to 75°.

According to a second aspect of the invention, there is a provided a vehicle comprising an air guide according to the first aspect of the invention.

### DRAWINGS

These and other aspects of the invention will now be described, by way of example only, with reference to the following drawings, in which:
FIG. 1 is a plan view of the underbody of a vehicle including an air guide according to a first embodiment of the invention;
FIG. 2 is a plan view of the front region of the vehicle of FIG. 1;
FIG. 3 is a plan view of the front region of the vehicle of FIG. 1, including an air guide according to a second embodiment of the invention; and,
FIG. 4 is a plan view of the front region of the vehicle of FIG. 1, including an air guide according to a third embodiment of the invention.

In the drawings, like parts are denoted by like reference signs.

### DESCRIPTION

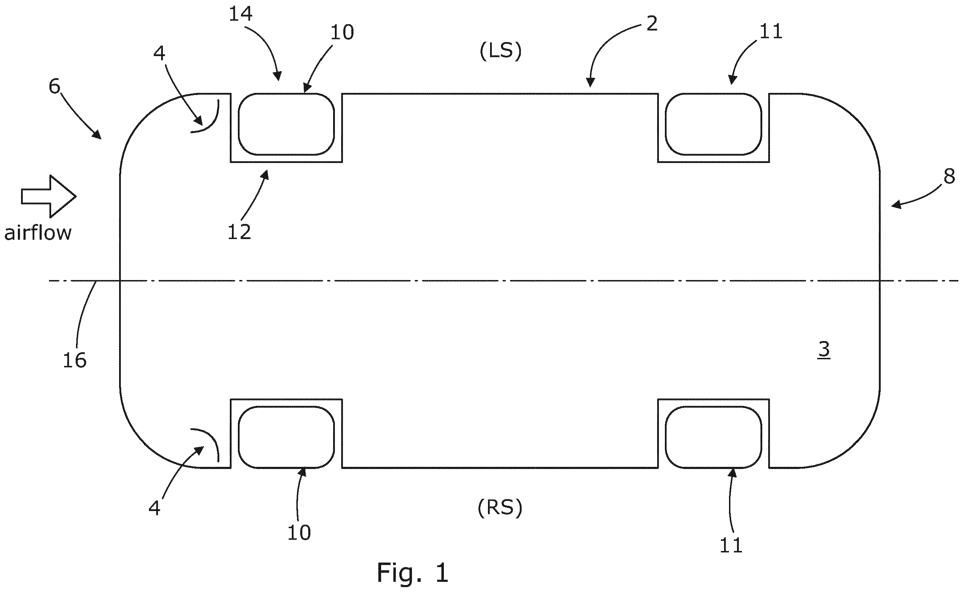

FIG. 1 is a plan view of an underbody 3 of a vehicle 2, in this case a motor vehicle, to which air guides 4 according to a first embodiment of the invention are applied. The front and rear parts of the vehicle 2 are generally designated by 6 and 8, respectively. The vehicle 2 comprises two front tires 10 and two rear tires 11. Each front tire 10 forms part of a front wheel and each rear tire 11 forms part of a rear wheel. Accordingly, the front and rear tires 10, 11 will be referred to as front and rear wheels 10, 11, respectively, hereinafter. The front and rear wheels 10, 11 each have an inboard side 12, which faces or is directed towards the centre of the vehicle 2, and an outboard side 14 that faces away from the vehicle 2. Positioned ahead of each front wheel 10, with respect to the longitudinal axis of the vehicle 2, is a respective air guide 4. The air guides 4 downwardly extend from the underbody 3 of the vehicle 2 partially to screen the frontal area 25 of the respective front wheel 10 when viewed from the front part 6 of the vehicle 2. The air guides 4 may be an integral part of a component forming the underbody 3 of the vehicle 2. Alternatively, they could be joined to the underbody 3 of the vehicle 2 using an appropriate attaching means. Two air guides 4 are shown in FIG. 1, each of which is positioned in a region of the vehicle 2 in front of one of the front wheels 10. However, it will be apparent to those skilled in the art that the air guides 4 could also be positioned ahead of the rear wheels 11.

For the purposes of the present disclosure, it can be assumed that the underbody 3 of the vehicle 2 is substantially symmetrical about a centreline 16 of the vehicle 2. Accordingly, further description will be made regarding the left side (LS) portion of the front part 6 of the vehicle 2, and the description regarding the right side (RS) portion will be omitted.

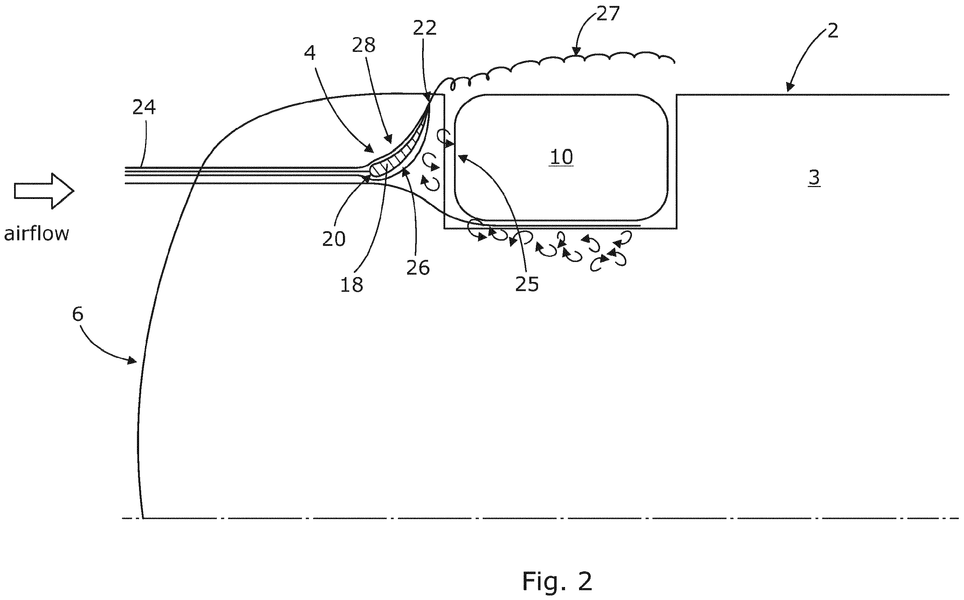

FIG. 2 is a detailed view of the air guide 4 located in the left side portion of the front part 6 of the vehicle 2. The air guide 4 includes a vortex generator 18 comprising a leading edge 20 and a trailing edge 22. In this embodiment of the air guide 4, the cross-sectional shape of the vortex generator 18 is an aerofoil. However, it will be apparent to the skilled reader that alternative cross-sectional shapes are also within the scope of the invention provided that they are suitable for generating a vortex.

In use, the vortex generator 18 functions to direct airflow 24, that would otherwise impinge the front wheel 10, to the outboard side 14 of the front wheel 10 when the vehicle 2 is moving relative to the air. The vortex generator 18 is orientated so that its camber line (not shown) in the region of the leading edge 20 is substantially parallel with the longitudinal axis of the vehicle 2, and its trailing edge 22 points in the direction of the outboard side 14 of the front wheel 10. In the embodiment shown, the vortex generator 18 is configured to direct the airflow from the longitudinal axis of the vehicle 2 by an angle of substantially 90°, although it will be appreciated by the skilled reader that alternative angles could be used provided that the airflow is redirected to the outboard side 14 of the front wheel 10. The positioning of the vortex generator 18 means that it traverses a proportion of the width of the front wheel 10. That is, part of the frontal area 25 of the front wheel 10 is hidden behind the vortex generator 18 when viewed from the front part 6 of the vehicle 2. The extent to which the vortex generator 18 of this embodiment traverses the width of the front wheel 10 is related to the chord line (not shown) of the vortex generator 18, which is a fictitious line extending straight from the leading edge 20 to the trailing edge 22. In this embodiment of the air guide 4, the vortex generator 18 traverses over half the width of the front wheel 10. However, other embodiments of the air guide 4 are envisaged in which the vortex generator 18 extends across the entire width of the front wheel 10.

The vortex generator 18 comprises a suction side 26, which is the convex side of the aerofoil cross section, and a pressure side 28, which is the concave side. In use, the airflow over the suction side 26 accelerates to create a region of low static pressure when compared to the atmospheric pressure. Conversely, the airflow over the pressure side 28 decelerates, which creates a region of high static pressure relative to the atmospheric pressure. The difference in the static pressures on the suction side 26 and the pressure side 28 creates a resultant aerodynamic force or lift force pointing in the direction of the inboard side 12 of the front wheel 10. This pressure difference also produces a three-dimensional circulatory flow pattern, in the form of a vortex, as air flows around the lowermost end or the bottom of the vortex generator 18 from the pressure side 28 to the suction side 26. The circulatory flow combines along the length of the vortex generator 18 to form a tip vortex 27 that trails from a region near to the trailing edge 22 and propagates downstream of the air guide 4 along the outboard side 14 of the front wheel 10, and away from the vehicle 2. The tip vortex 27 produced by the vortex generator 18 of this embodiment rotates clockwise as it propagates downstream when viewed from the front part 6 of the vehicle 2. Conversely, the vortex produced by the vortex generator on the right side of the vehicle 2 rotates anticlockwise when viewed from the same direction.

The wake produced by the rotation of the front wheel 10 as the vehicle 2 moves relative to the air creates a region of low-momentum, turbulent flow that is superimposed on the higher-velocity freestream air flowing along the side of the vehicle 2. The rotational flow that characterises the vortex 27 produces a low pressure region at its centre that entrains the wake on the outboard side 14 of the front wheel 10. This increases the overall momentum of the wake and redirects it away from the vehicle 2, thereby lowering the drag coefficient of the vehicle 2.

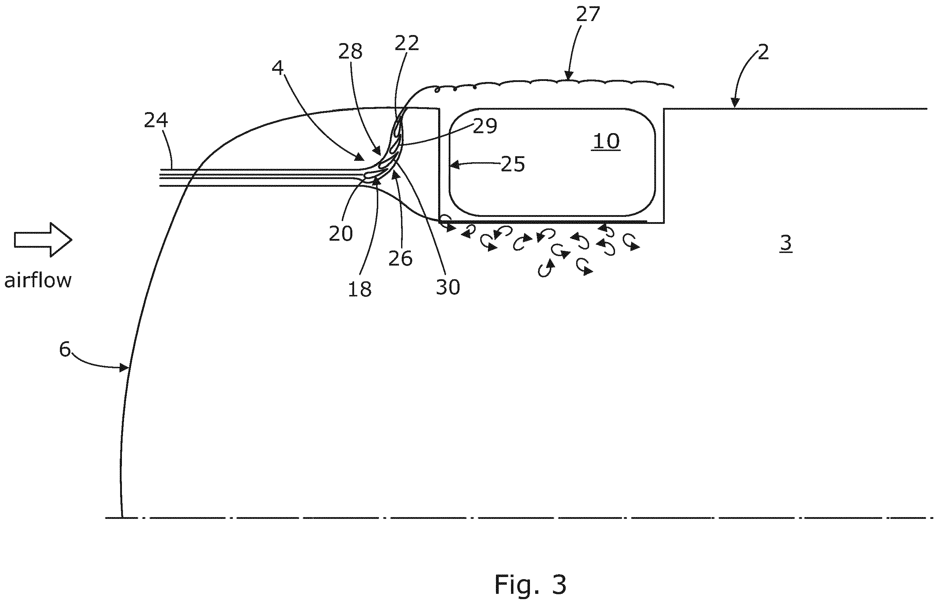

FIG. 3 is a detailed view of a second embodiment of the air guide 4. This embodiment of the air guide 4 is also shown positioned in the left side portion of the front part 6 of the vehicle 2. However, it will be appreciated by those skilled in the art that this embodiment of the air guide 4, along with all of the other embodiments of the air guide 4 disclosed in this document, could also be used in relation to the other wheels 10, 11 of the vehicle 2. In this embodiment, the vortex generator 18 comprises a plurality of plates 29 arranged in series. Specifically, the vortex generator 18 comprises four plates 29 arranged in series and positioned such that they collectively define a substantially aerofoil-shaped cross section. Each individual plate 29 of the plurality of plates 29 also has an aerofoil-shaped cross section. The convex sides and concave sides of the plates 29 collectively define the suction side 26 and the pressure side 28 of the vortex generator 18, respectively. The plates 29 are offset with respect to each other such that the trailing edge 22 region of one plate 29 is overlaid by the leading edge 20 region of the consecutive plate 29. That is, parts of the respective chord lines of the plates 29 overlay each other. A blowing slot 30 is defined between consecutive plates 29 in the region of the overlay. This embodiment of the air guide 4 comprises three blowing slots 30.

The overall function of the air guide 4 of this embodiment is the same as the first embodiment shown in FIG. 2. That is, a region of low static pressure is created by an accelerating airflow over the suction side 26 of the vortex generator 18 and a region of high static pressure is created by a decelerating airflow over the pressure side 28 of the vortex generator 18. The pressure difference between the suction side 26 and the pressure side 28 creates a resultant lift force pointing in the direction of the inboard side 12 of the front wheel 10, as well as a tip vortex 27 propagating downstream of the air guide 4 on the outboard side 14 of the front wheel 10. The tip vortex 27 is produced from air flowing around the bottom of the vortex generator 18 from the pressure side 28 to the suction side 26. However, this embodiment is configured also to allow air to flow from the pressure side 28 to the suction side 26 of the vortex generator 18 through the blowing slots 30. Air flowing over the suction side 26 of the vortex generator 18 travels through an adverse or unfavourable pressure gradient. That is, the convex shape of the suction side 26 means that the static pressure gradient increases in the flow direction, from the leading edge 20 to the trailing edge 22. This can cause the airflow to separate from the suction side 26 before it reaches the trailing edge 22 of the vortex generator 18, which would create high form drag and result in a breakdown of the circulatory flow needed to form the tip vortex 27. However, early separation of the airflow is avoided in the present embodiment by the introduction of high-energy or turbulent air through the blowing slots 30. This raises the kinetic energy of the airflow on the suction side 26 at intervals corresponding to the position of the blowing slots 30, meaning that it can withstand the adverse pressure gradient and remain connected to the suction side 26 until it reaches the trailing edge 22 of the vortex generator 18.

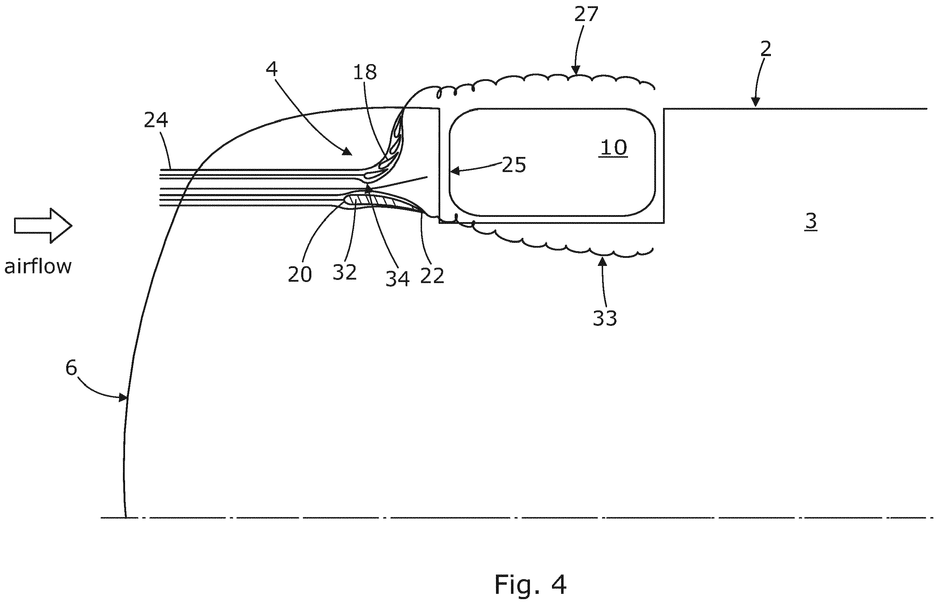

A third embodiment of the air guide 4 is shown in FIG. 4. This embodiment differs from the first two embodiments of the air guide 4 in that it comprises two vortex generators: a first vortex generator 18 arranged to produce a first tip vortex 27 propagating along the outboard side 14 of the front wheel 10; and, a second vortex generator 32 configured to create a second tip vortex 32, extending downstream of the air guide 4 along the inboard side 12 of the front wheel 10.

The first vortex generator 18 is substantially the same as the vortex generator 18 of the second embodiment, which comprises a series of plates 29. However, it will be appreciated by those skilled in the art that the first vortex generator 18 of the third embodiment could instead be the same as the one shown in the first embodiment.

Like the first vortex generator 18, the second vortex generator 32 also has an aerofoil-shaped cross section, comprising a leading edge 20 and a trailing edge 22. Although it will be apparent that alternative cross-sectional shapes are also within the scope of the invention provided that the alternative shapes are suitable for generating a tip vortex. Unlike the first vortex generator 18, however, the second vortex generator 32 is positioned so that the difference in pressure created across its pressure side 28 and its suction side 26 when the vehicle is moving relative to the air creates a resultant lift force pointing in the direction of the outboard side 14 of the front wheel 10.

The second vortex generator 32 comprises an aerofoil-shaped cross section defined by a single piece. However, embodiments are envisioned in which the second vortex generator 32 comprises a series of plates that collectively define a substantially aerofoil-shaped cross section, similar to the vortex generator 18 of the second embodiment.

In use, the second vortex generator 32 functions to direct airflow 24, that would otherwise either impinge the front wheel 10 or be redirected by the first vortex generator 18, to the inboard side 12 of the front wheel 10. The second vortex generator 32 is positioned so that its camber line (not shown) in the region of the leading edge 20 is substantially parallel with the longitudinal axis of the vehicle 2 and its trailing edge 22 points in the direction of the inboard side 12 of the front wheel 10. In the embodiment shown, the second vortex generator 18 is configured to redirect the airflow from the longitudinal axis of the vehicle 2 by an angle of substantially 30°.

When viewed from the front part 6 of the vehicle 2, a proportion of the frontal area 25 of the front wheel 10 is hidden behind the vortex generators 18, 32. The first vortex generator 18 traverses over half the width of the front wheel 10, whereas the second vortex generator 32 traverses substantially a quarter of the width of the front wheel 10. However, embodiments are envisaged in which the extent to which the first and second vortex generators 18, 32 respectively traverse the width of the front wheel 10 is reversed. That is, the second vortex generator 32 traverses a larger proportion of the width of the front wheel 10 when compared to the first vortex generator 18. Alternatively, the first and second vortex generators 18, 32 may be arranged to traverse substantially equal proportions of the width of the front wheel 10.

The trailing edges 22 of the first and second vortex generators 18, 32 are located in the same plane extending across the vehicle 2 substantially perpendicular to the longitudinal axis of the vehicle 2. That is, the first and second vortex generators 18, 32 terminate at the same distance from the front wheel 10. Conversely, the leading edges 20 of the first and second vortex generators 18, 32 are located in different planes extending across the vehicle 2, with the leading edge 20 of the first vortex generator 18 being positioned upstream relative to the leading edge 20 of the second vortex generator 32.

In use, air flows over the first and second vortex generators 18, 32 when the vehicle 2 moves relative to the air to establish a pressure difference between the suction side 26 and the pressure side 28 of the respective vortex generators 18, 32. This pressure difference produces a circulatory flow pattern as air flows around the lowermost ends of the vortex generators 18, 32, which combines to form respective tip vortices 27, 34 propagating downstream of the air guide 4 either side 12, 14 of the front wheel 10. The tip vortices 27, 34 function to entrain the wake produced either side 12, 14 of the front wheel 10 when it is rotating to lower the drag coefficient of the vehicle in the manner described above.

It will be appreciated by those skilled in the art that the invention has been described by way of example only, and that a variety of alternative approaches may be adopted without departing from the scope of the invention as defined by the appended claims.

## Claims

1. An air guide (4) for directing airflow round a wheel of a vehicle (2) when the vehicle is moving relative to the air, the air guide comprising:
a first vortex generator (18) positionable in a region in front of the wheel with respect to the longitudinal axis of the vehicle and projecting downwards from an underbody of the vehicle,
the first vortex generator (18) being configured to generate a first tip vortex (27) propagating downstream of the air guide (4) substantially along an outboard side (14) of the wheel.

2. An air guide (4) according to claim 1, wherein the first vortex generator (18) is positioned to traverse a proportion of the width of the wheel.

3. An air guide (4) according to claims 1 or 2, wherein the first vortex generator (18) is positioned to traverse the entire width of the wheel.

4. An air guide (4) according to any of claims 1 to 3, further comprising a second vortex generator (32) positionable adjacent the first vortex generator (18) in the region in front of the wheel and projecting downwards from the underbody of the vehicle (2),
the second vortex generator (32) being configured to generate a second tip vortex (32) propagating downstream of the air guide (4) substantially along an inboard side (12) of the wheel.

5. An air guide (4) according to claim 4 when dependent on claim 2, wherein the first vortex generator (18) and the second vortex generator (32) are positioned to traverse substantially equal proportions of the width of the wheel.

6. An air guide (4) according to claim 4 when dependent on claim 2, wherein the first vortex generator (18) is positioned to traverse a larger proportion of the width of the wheel when compared to the proportion of the width of the wheel traversed by the second vortex generator (32).

7. An air guide (4) according to any preceding claim, wherein the cross-sectional shape of the first vortex generator (18) is an aerofoil.

8. An air guide (4) according to any of claims 4 to 7, wherein the cross-sectional shape of the second vortex generator (32) is an aerofoil.

9. An air guide (4) according to any preceding claim, wherein the first vortex generator (18) comprises a plurality of plates arranged in series, wherein the cross-sectional shape of at least one plate of the plurality of plates is an aerofoil.

10. An air guide (4) according to any of claims 4 to 9, wherein the second vortex generator (32) comprises a plurality of plates arranged in series, wherein the cross-sectional shape of at least one plate of the plurality of plates is an aerofoil.

11. An air guide (4) according to any preceding claim, wherein consecutive plates of the plurality of plates are arranged to overlay.

12. An air guide (4) according to any of claims 9 to 11, wherein the plurality of plates arranged in series comprises a blowing slot located between consecutive plates of the plurality of plates.

13. An air guide (4) according to any one of claims 7 to 12, wherein the convex side of the first vortex generator (18) substantially faces a region on the inboard side (12) of the wheel such that, when in use, the resultant lift force generated by the first vortex generator points towards the inboard side of the wheel.

14. An air guide (4) according to any one of claims 7 to 12, wherein the convex side of the first vortex generator (18) substantially faces a region on the outboard side (14) of the wheel such that, when in use, the resultant lift force generated by the first vortex generator points towards the outboard side of the wheel.

15. An air guide (4) according to any of claims 8 to 14 , wherein the convex side of the second vortex generator (18) substantially faces a region on the inboard side (12) of the wheel such that, when in use, the resultant lift force generated by the second vortex generator (32) points towards the inboard side of the wheel.

16. An air guide (4) according to any of claims 8 to 14, wherein the convex side of the second vortex generator (32) substantially faces a region on the outboard side (14) of the wheel such that, when in use, the resultant lift force generated by the second vortex generator points towards the outboard side of the wheel.

17. An air guide (4) according to any of claims 7 to 16, wherein the cross-sectional shape is a cambered aerofoil.

18. An air guide (4) according to any preceding claim, wherein the first vortex generator (18) and / or the second vortex generator (32) are arranged to direct the airflow from the longitudinal axis of the vehicle by an angle of up to 90°.

19. An automobile comprising an air guide (4) according to any preceding claim.
